# EUROPEAN PATENT APPLICATION

(11) **EP 1 860 138 A1**
(43) Date of publication of application: **28.11.2007**
(21) Application number: 06404001.7
(22) Date of filing: 25.05.2006
(51) Int. Cl.: C08J 3/215, C08K 3/34, C08L 93/00

(54) **Biodegradable thermoplastic nanocomposite polymers**

(71) Applicant: Sabanci Universitesi, 34956 Tuzla-Istambul (TR)
(72) Inventor: Menceloglu, Yusuf Ziya, 34956 Tuzla-Istanbul (TR); Inceoglu, Funda, 34956 Tuzla-Istanbul (TR)
(74) Representative: Arkan, Selda Mine

(57) **Abstract**

The present invention relates to natural polymer-clay nanocomposites, to biodegradable thermoplastic nanocomposite granules and to biodegradable thermoplastic nanocomposite polymers with superior optical and mechanical properties. The present invention also relates a process for producing said nanocomposites, said granules and said polymers.

## Description

The present invention relates to natural polymer-clay nanocomposites, to biodegradable thermoplastic nanocomposite polymers with superior optical and mechanical properties. The present invention also relates a process for producing said nanocomposites and said polymers.

Polymers have excellent physical, chemical and mechanical properties but their increased use mainly as packaging materials lead to substantial environmental pollution. Unfortunately polymer recycling has not been successful and it is estimated that only 1 % of the produced plastics is recycled worldwide. This is because recycling is expensive and the synthetic waste is difficult to sort according to origin, color and contained additives.

Polyethylene is one of the widely used polyolefin polymer in the industry due to its valuable properties such as good processability, transparency, flexibility, cost efficiency. However it has some drawbacks like poor stiffness, low temperature toughness and slow rate of disappearance from the environment.

Thus, there is increasing need to produce and use more environmental friendly polymeric materials and the most efficient way would be to replace the synthetic plastics by biodegradable polymers.

The incorporation of small amount of silicate to produce a nanocomposite material provides both stiffness and the toughness. However, due to its hydrophobic nature, the homogeneous dispersion of the hydrophilic silicate layers in polyethylene is very difficult. Therefore, natural silicate particles are first modified with alkyl-ammonium salt in order to provide good interaction between silicate and polymer.

On the other hand, most of the natural polymers such as starch, cellulose, chitin, lignin, keratin and the like are very polar and thus compatible with the natural clay. Yet, the incorporation of the natural clay particles together with the plasticizer on these biopolymers in order to produce nanocomposite materials do not provide satisfactory properties because the main matrix is very moisture sensitive and the melt strength of the resulting product becomes very poor at high clay loading making the extrusion process and blown molding difficult.

The prior art comprises a technique in which natural polymer is combined with a clay in order to replace the conventional plastic materials with the renewable ones.

US-A-6,228,501 discloses the production of a porous body of polysaccharide-clay composite that can be used as a chock absorbing, heat insulator or sound absorbing material. The presence of clay provides high compression strength when compared to other commercially available foamed polymers.

US-A-6,811,599 discloses the production of biodegradable thermoplastic material in an extruder. The product includes a natural polymer, a plasticizer and an inorganic layered compound such as clay. The presence of clay as a filler keeps the plasticizer in the material and hence the mechanical properties of the composite film are more stable compared to those in other biodegradable thermoplastic materials. This patent also discloses the use of the natural polymer having high degree of substitution, without necessitating any plasticizer. However such composite materials generally have a poor melt strength to be used in blown film applications and since they have a natural polymer matrix, they are permeable to moisture and soluble in water, which decrease their shelf life and makes the composite film unsuitable for packaging purposes.

Another approach is described in US-A-6,579,927 and US-A-6,812,272 that propose a technique to produce nanocomposite material having a polymeric matrix, clay and a block or graft copolymer comprising one or more first structural units (A) providing compatibility with clay and one or more second structural unit (B) that are compatible, with the polymeric matrix. These patents describe the process such that the block or graft copolymer is first combined with clay or with a polymeric matrix, follower by adding the third component. Alternatively all the three components can be brought together either by agitation or by extrusion method. According to these patents as the structural unit (A) of graft or block copolymer starch can also be used and as the structural unit (B) of graft or block copolymer low molecular weight polyolefins, vinyl polymers, polyesters, polyethers, polysiloxanes or acrylic acid polymers can be used. However it is not possible to make a graft copolymer from starch and polyolefin, without modifying the polyolefin with some functional monomers, like maleic anhydride, glycidyl methacrilate etc. Moreover, these patents do not relate to the use of starch homopolymer for clay modification or making the starch thermoplastic which would provide flexibility, transparency and homogeneous dispersion of the natural components in the polymer matrix.

In view all of the prior arts, it is known that the physical properties of the main matrix either remains the same or decreased even at low concentration of the natural filler. The most encountered reduction occurs in the properties of gloss, toughness, tear and tensile strength and percentage elongation with the addition of natural components, like starch, cellulose, keratin and like to the thermoplastic resinous matrix.

Thus, there is a need to produce polyethylene film that is biodegradable and still transparent, mechanically stable and economic.

Thus an object of this invention is to provide a new biodegradable plastic that is transparent in appearance, superior in mechanical strength, easily processable and moldable.

It is a further object of this invention to provide a new method for producing said biodegradable plastic, which is economic in processing techniques and raw materials used.

The present invention provides for a plastic composition superior in biodegradability, transparency, processability and mechanical properties as well as a new method for producing said biodegradable plastic, which is economic in processing techniques and raw materials used.

The present invention relates thus to a method for preparing a natural polymer-clay nanocomposite, comprising dissolving a natural polymer in a solvent, mixing it with a clay dispersion, stirring it, obtaining a precipitate, characterized in that • the pH of the solution is adjusted to acidic before the addition of the clay dispersion, • the clay is added in an amount of 2 to 50 wt% based on the weight of the natural polymer and in that • it comprises a plasticizer present in an amount of 25% to 80wt% based on the weight of the natural polymer.

The plasticizer may be present in the solvent of the natural polymer or in the clay dispersion. Alternatively the precipitate is grounded to a powder and the plasticizer is blended with the grounded powder.

Preferably the pH of the solution is adjusted between 4 and 5.

The clay may be selected among naturally occurring smectite clays having a layered structure and a cation exchange capacity of from 30-250 meq/ 100 gram, like montmorillonite.

The natural polymer is selected from the group comprising starch, chitosan, carbohydrates, keratin, cellulose, proteins and derivatives thereof like carboxy methylated cellulose (CMC) or ester grafter chitosan, polylacticacid, etc. Preferably the natural polymer is starch like corn starch, wheat starch, rice starch, potato starch etc.

The plasticizer is selected from the group comprising glycerol, formamide, ethylene glycol, propylene glycol, polyethylene glycol and sorbitol and/or may be a polymer selected from aliphatic polyesters, copolyesters with aliphatic and aromatic blocks, polyester amides, polyester urethanes, polyethylene oxide polymers, polyether polyols, polyglycols and/or mixtures thereof.

The present invention also relates to a natural polymer-clay nanocomposite obtained in the method described above wherein the clay layers are intercalated with the natural polymer. (or clay is ion-exchanged with the natural polymer).

The present invention also relates to a process for preparing a biodegradable thermoplastic nanocomposite, comprising the following steps:
➢ melt blending a natural polymer-clay nanocomposite in an extruder at a suitable
temperature of between 110-250°C with a synthetic polymer;
➢ granulating the material obtained in a pelleticizer;
➢ molding the granules obtained.

The natural polymer-clay nanocomposite is obtained with the method described above. The melt blending step also comprises blending a compatibilizing agent in an amount of 5 to 30 wt%, based on the total weight.

Preferably the compatibilizing agent is selected from the group comprising: maleic anhydride, glycidyl epoxidized, acrylic acid and/or TMI grafted polyolefins.

The synthetic polymer can be selected from the group comprising: polyethylene oxide, low density polyethylene, high density polyethylene, polypropylene and the combination thereof may be chosen, suitable thermoplastic resins are any thermoplastic material having a melting temperature lower than the degradation temperature of the natural polymer.

The present invention also relates to biodegradable thermoplastic nanocomposite polymers obtained with the process described above wherein the natural polymer is present in an amount of 10 to 50 wt% of the total weight.

The weight ratio of the amount of clay to the amount of polymeric matrix may be between 1 to 10%, preferably between 1 to 5 wt %.

The biodegradable thermoplastic nanocomposite polymers are transparent and have superior tensile strength and elongation properties.

Finally the present invention relates to packaging materials containing a natural polymer-clay nanocomposite prepared with a method described above, or containing a natural polymer-clay nanocomposite described above, or containing a natural polymer-clay nanocomposite polymer prepared with a process as described above or containing a biodegradable thermoplastic nanocomposite polymer described above.

### Short description of the figures

- Figure 1: is an X-ray diffraction graph of starch-clay nanocomposite material according to Example I.
- Figure 2: is a scanning electron microscope (SEM) image of the material according to Example 1.
- Figure 3: is a XRD graph of a) clay and b) Chitosan-clay nanocomposite
- Figure 4: is a XRD graph of TPS-clay nanocomposite produced in extruder
- Figure 5: includes SEM images of a) Starch-PE, b) Starch-PEgMA-PE and c) PE-PEgMA-Starchclay hybrid.
- Figure 6: is a FTIR spectrum of a) PE-Starch and b) PE-PEgMA-Starch.
- Figure 7: is a SEM image of a) PE- PEgMA -TPS and b) PE- PEgMA -TPSclay hybrid.
- Figure 8: is a UV-Vis transmittance spectrum of a) PE, b) PE-PEgMA-Starchclay hybrid, c) PE- PEgMA-TPSclay hybrid and d) PE/PEgMA/Starch films.
- Figure 9: is a DSC thermogram of a) PE, b) PE-PEgMA-Starch, and c) PE-PEgMA-Starchclay hybrid.
- Figure 10: shows SEM images of degraded a) PE-Starch and b) PE-PEgMA- Starch clay films.

### Detailed description

The present invention relates to biodegradable thermoplastic nanocomposite materials comprising a melt blend of natural polymer/clay hybrid with polyolefin in the presence of compatibilizer and plasticizer.

The combination of polyethylene with the natural polymer and clay in the present invention increases the processability and melt strength of the natural polymer, biodegradability of the synthetic polymer and decreases the moisture sensitivity of the biopolymer. The material is superior in mechanical strength, gas barrier properties, biodegradability, processability and transparency in the presence of plasticizer

The natural polymer part described in this invention may be any natural polymer like carbohydrates, keratin, chitosan, cellulose, proteins and derivatives thereof. Derivatives may be modified biopolymers for example acetylated, hydroxypropylated, polyester-grafted, thermo-plastified starch, carboxymethylated cellulose or ester-grafted chitosan.

Natural polymer can be selected from any natural polymers like starch, keratin, chitosan, cellulose, proteins and derivatives thereof. It is used in an amount of from 10 to 50 wt %, based on total amount.

Due to having the smallest particle size and providing better dispersion in blend with thermoplastic polymer, corn starch is preferred but starch obtained from wheat, rice and potato may also be used.

The clay is preferentially natural smectite clay like sodium montmorillonite having a layered structure and a cation exchange capacity of from 30 to 250 meq/ 100 gram, preferentially 100 to 250meq/100 gram. Clay can be present in an amount of from 2 to 50 wt. %, based on the weight of natural polymer.

Compatibilizer is used to provide adhesion between natural polymer-clay hybrid and synthetic polymer. Preferable examples for the compatibilizer include maleic anhydride, glycidyl epoxidized, acrylic acid and/or TMI grafted polyolefins depending on the functional groups in biopolymers. It can be maleic anhydride grafted polyethylene, glycidyl epoxidized polyethylene, acrylic acid grafted polyethylene, 3-isopropenyl-,-dimethylbenzene isocyanate (TMI) grafted polyethylene or silane grafted polyolefins and it is used in an amount of 5 to 30 % based on the total weight. Typically, the compatibilizer is incorporated in an amount of 5 to 20 wt. %, based on the total weight.

Plasticizer is used to decrease the strong intermolecular attraction between chains of natural polymer so that it becomes thermoplastic and easily melt mixed with synthetic resin.

Suitable plasticizers may be glycerin (glycerol), formamide, ethylene glycol, propylene glycol, polyethylene glycol, sorbitol, and urea and/or may be a polymer selected from an aliphatic polyester, a copolyester with aliphatic and aromatic blocks, a polyester amide, a polyester urethane, a polyethylene oxide polymer, a polyether polyol, polyglycol and/or mixtures thereof. The plasticizer content is 25 to 80 wt %, based on the natural polymer. Preferably, the amount of the plasticizer is 25 to 60wt%, based on the weight of the natural polymer.

The synthetic resin used in the present invention may be any thermoplastic material having its melting temperature lower than the degradation temperature of the natural polymer. Polyethylene oxide, low density polyethylene, high density polyethylene, polypropylene and the combination thereof may be chosen as suitable thermoplastic resins

Most of the plasticizer is retained in the polymer during the extrusion process

The pre-dispersion of clay in natural polymer before blending with polyolefin provides many advantageous to the final product.

First of all, it causes homogeneous distribution of natural clay also in polyolefin which is normally not possible, without making the clay, an organophilic. This reduces the cost of the product since natural montmorillonite ranges in price from $200 to $1,500 per ton, while it is in the range from $1,500 to $4,000 per ton for organophilic clay.

The clay layers in natural polymer increases the pathway of the moisture so that the self-life of the final product is prolonged.

The mechanical properties such as tensile strength and tensile elongation of the biodegradable thermoplastic films prepared as described above were determined by UTM (Universal Testing Machine) according to ASTM standard. The surface and cross sections were investigated by scanning electron microscope (SEM).

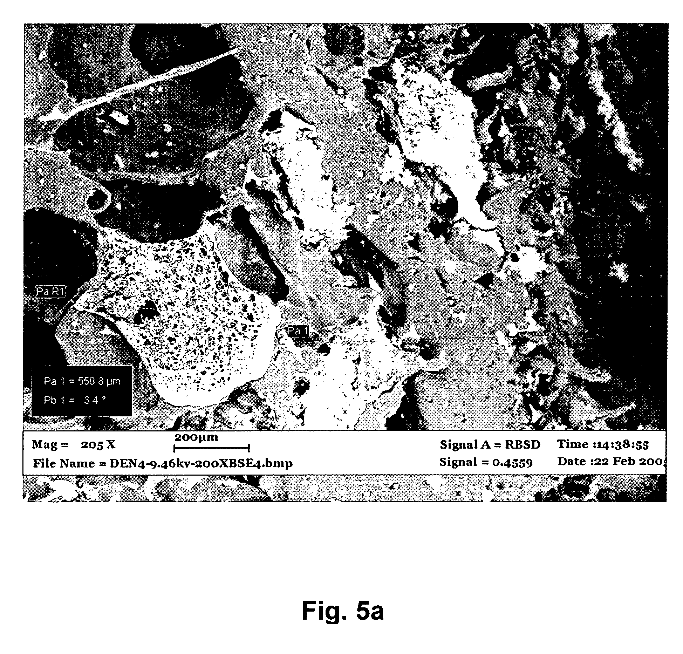

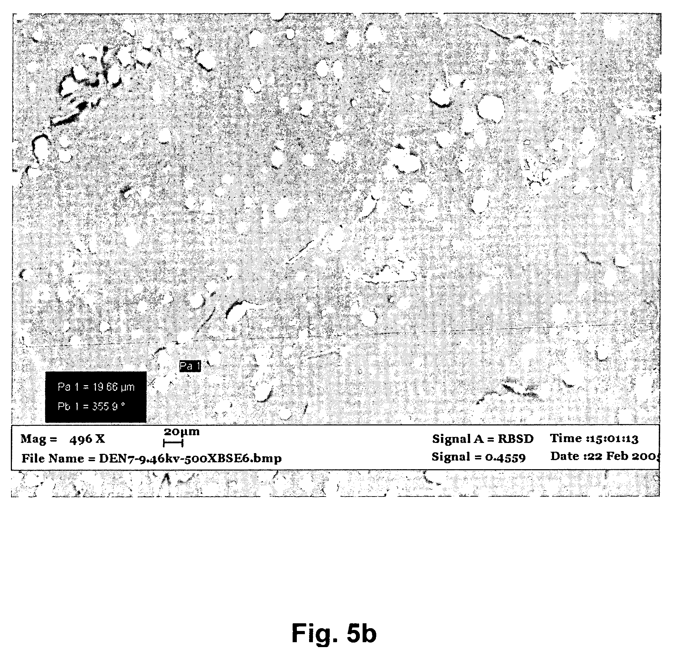

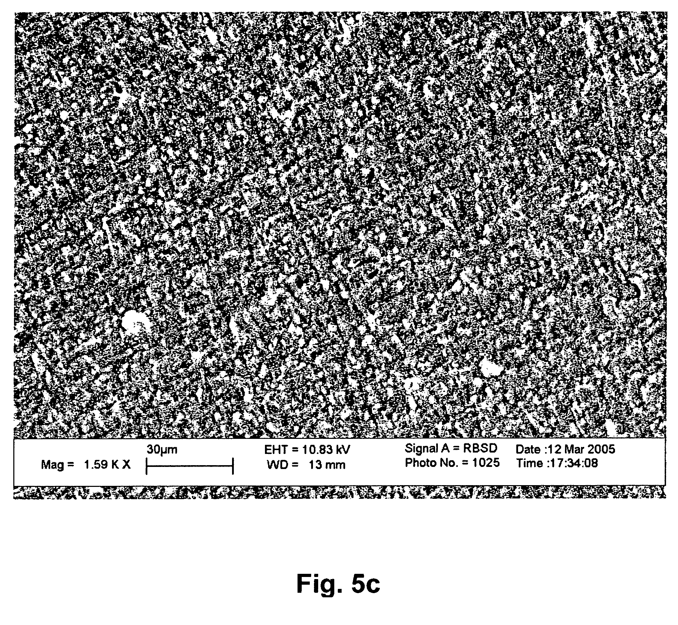

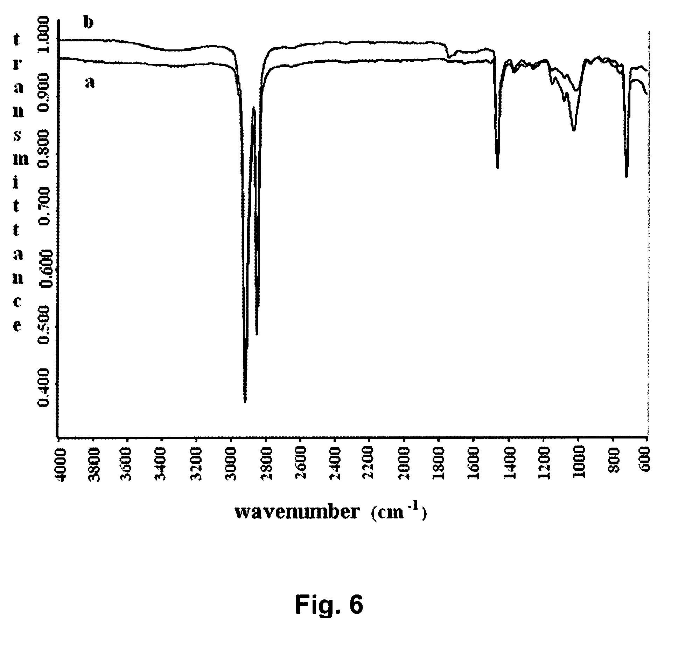

The disappearance of the distinct boundary between matrix resin and starch particles on the cross-section of granules observed by SEM (Refer to FIG. 5) and the compatibility between the natural polymer and polyethylene matrix were proved showing the absorbing peak of ester carboxyl group on infrared absorption spectrum (Refer to FIG. 6).

The biodegradability was investigated by incubating the films in enzyme solution that degrade both amylase and amylopectin chains in starch and calculate the glucose concentration in solution using UV- absorption spectrophotometer.

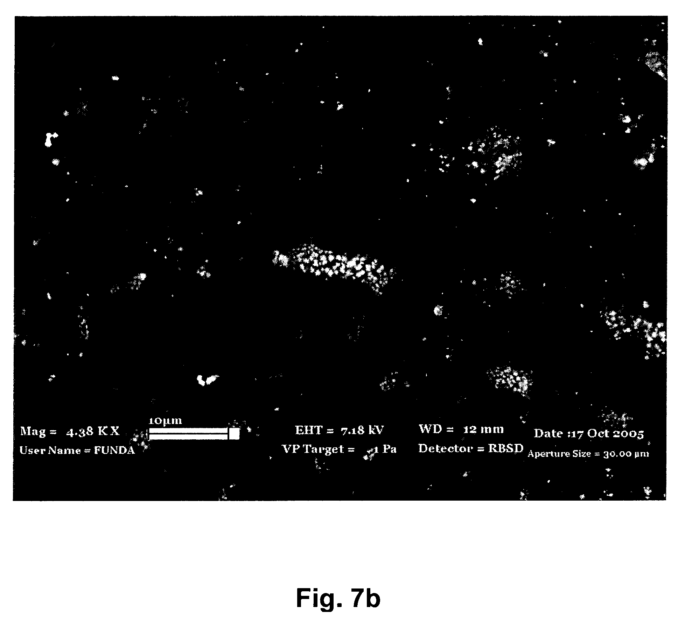

These blends also exhibit superior moisture and gas barrier properties due to the dispersion of clay layers mostly in a natural component which is normally sensitive to the environmental moisture (see Figure 7b).

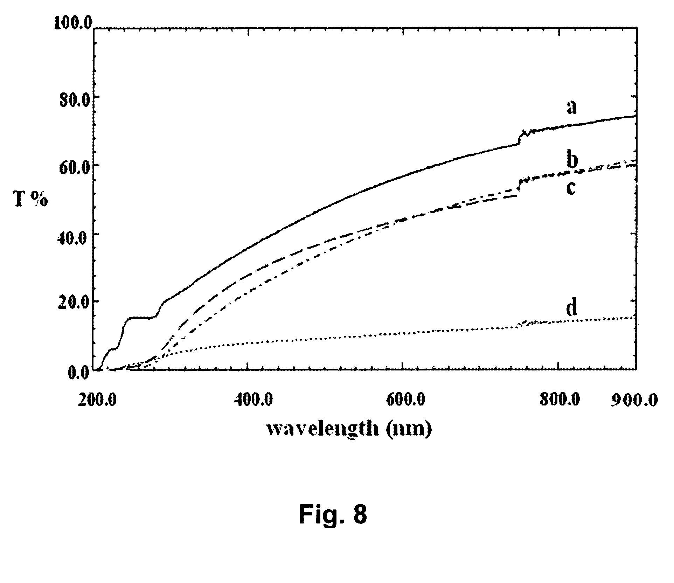

The nano-scale dispersion of clay and plasticization of the natural polymer also provides transparency to the final product and makes it further proper for packaging applications (see Figure 8).

Furthermore, the presence of clay in the final matrix improves the tensile properties of the final product as can be seen in Table I. Normally, the addition of biopolymer deteriorates significantly the mechanical properties of the synthetic polymers.

**Table I**

| Mechanical Properties of the composite films | | | | |
|---|---|---|---|---|
| Sample No | Sample | Tensile Strength | Strain@ Break | Young' Modulus (Mpa) |
| 1 | PE | 9.72 | >500 | 107.96 |
| 2 | PE- ST | 6.59 | 22.39 | 123.83 |
| 3 | PE-PEgMA-Starch | 8.88 | 24.75 | 151.54 |
| 4 | PE-PEgMA-TPS | 8.31 | 55.21 | 125.50 |
| 5 | PE-PEgMA-Starchclay hyb. | 8.79 | 31.47 | 139.31 |
| 6 | PE-PEgMA-TPSclay hyb. | 10.58 | 125.23 | 137.62 |

The major problem encountered in all of such blends containing biopolymers is that a significant decrease occurs in tensile strength, elongation, toughness; tear strength, impact and coefficient of friction properties of the base resin.

On the other hand, in the present invention, the incorporation of small amount of natural clay to the synthetic polymer in the form of starch/clay hybrid followed by plasticization of starch increased both the tensile strength and elongation properties of the final product as can be seen on Table 1.

High elongation behavior of the biodegradable nanocomposite film can be attributed to three different mechanisms. First of all, it is obvious that plasticization of the starch molecules increases the interfacial adhesion between PE matrix, starch and clay layers. This increased interfacial adhesion improved the nano-scale reinforcing of the composite and led to better elongation properties and higher tensile strength even higher than that of pristine PE.

Secondly, the presence of clay may inhibit the evaporation of plasticizer during extrusion process so that it increases the effect of TPS on the elongation properties.

The third possible mechanism in the improvement of flexibility with clay is the modified crystalline structure of the final composite because clay acted as a nucleating agent and inhibited the crystallinity, thus increasing the chain mobility.

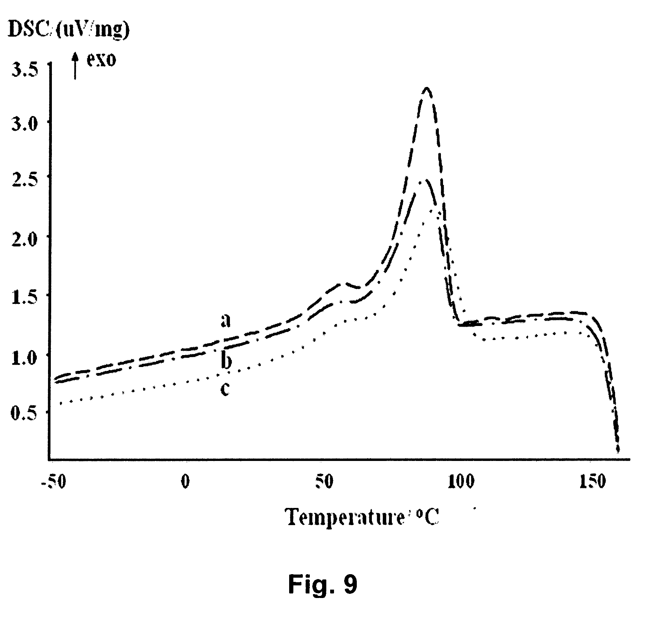

This behavior was investigated using DSC curve. The crystallization peak (T_{P}) of PE-PEgMA-Starch-clay nanocomposite is higher than that of samples having no clay, indicating the increased rate of crystallization of PE with the addition of clay as can be seen on Table II and Figure 9.

**Table II**

| DSC data of samples during nonisothermal crystallization process | | | |
|---|---|---|---|
| Sample | T ½ (min) | TP (°C) | ΔHC(J/g) |
| PE | 0,9 | 88,3 | 91,7 |
| PE-PEgMA-Starch | 0,9 | 90,0 | 70,0 |
| PE-PEgMA-StarchClay | 1,0 | 92,6 | 62,0 |

The noticeable decrease in the crystallization enthalpy, ΔH_{c}, indicated that the degree of crystallinity decreases with the addition of clay, as shown in Table II. The effect of this behavior on elongation properties of samples 5 compared to sample 3 and sample 6 compared to sample 4 is seen in Table I. The effect is much more pronounced in sample 6 that is attributed to higher interfacial adhesion between PE matrix and TPS-clay hybrid.

This nucleation effect of clay provides easier and rapid molding properties to the final product and this reduced cycle time is very important in industry since it increases the rate of production.

The invention also relates to the preparation of the biodegradable nanocomposite material in two steps. First step includes the preparation of thermoplastic natural polymer (starch, chitosan, cellulose and like)-clay nanocomposite. The material is then extruded with the matrix resin (polyethylene, polyethylene oxide, polypropylene) and compatibilizing agent (maleic anhydride, methacrylic anhydride, glycidyl epoxidized, acrylic acid, TMI grafted polyolefins) in a certain amount. The pelleticizer is used to make granules which are then compression molded into films.

The invention also relates to a method for preparing starch-clay nanocomposite master batch, wherein starch is allowed to dissolve completely in dimethyl sulfoxide (DMSO)-water mixture in ultrasonicator followed by adding clay dispersion to the solution. The water as a solvent does not completely dissolve the starch, it just make a gel, so the separation of clay layers becomes much more difficult. Dmso-water mixture provides suitable solvent system to completely dissolve the starch and homogeneously disperse the clay particles. The mixture is stirred and the solvent is removed from the system. The powdered form of natural polymer-clay hybrid is mixed with plasticizer of natural polymer or used as it is, and it is blended with polyolefins in the presence of compatibilizer.

The solution method for producing the natural polymer-clay hybrid is much more suitable than the twin screw extruder method like disclosed previously in U.S. Pat. No 6,811,599 because it can be produced as an additive in the form of powder and than packaged for transportation to the compounders. Especially, for companies producing organophilic clays, there will be no need for the extra equipment. Compounders can buy these additives and mix them easily with plasticizer of natural polymer before melt blending process in extruder.

The packaging and transportation will be much easier than its granular form produced via extruder. Because after extrusion process, the plasticizer evaporates from the system during drying of granules and during transportation so it lose its effectiveness, leaving the natural polymer-clay masterbatch more rigid and difficult to melt for reprocessing.

The novel biodegradable nanocomposite material described above have, besides relatively rapid biodegradability, excellent mechanical and optical properties thus it is suitable for various applications including the production of agricultural covering mulch films, packaging materials, yogurt containers, marketing bags, waste containers for composting, bottles, etc.

A better understanding of the present invention may be provided by the following examples which are used to illustrate, but do not limit the scope of the present invention.

### EXAMPLES

In the experiments, the following equipment was used:
Ultra-sonicator: Bandelin Sonorex. Ultrasonicator
Mechanical Stirrer:Heidolph RZR 2102
Magnetic Stirrer: VELP Scientifica Heating Magnetic Stirrer
Two-Roll Mills: Scientific LRM-S-110
Hot press: Scientific LP-S-50
X-ray diffractometer:Bruker axs D8 Advance
FTIR Spectrometer: Bruker Equinox 55
Scanning electron microscope (SEM): Leo G34-Supra 35VP
Twin-screw extruder: Leistritz Micro 27GL-44D
UV-Vis spectrophotometer: Shimadzu UV-3150
Tensile tester: Zwick/ Roell Z100 BT1-FB100TN
Differantial Scanning Calorimetry: Netzsch DSC 204

### Example 1: Obtaining Starch-Clay Particles in water

10,5g montmorillonite with a cation exchange capacity (CEC) of 120meq/100g was dispersed in 250ml of distilled water and allowed to swell for 24 hrs. 130 g of starch was dissolved in 1600 mL 90 vol% DMSO and kept in sonicator for two hours in order to obtain clear solution.

The clay suspension was then added to the starch solution after adjusting the pH of the solution to 4.9 with HCl and the mixture was stirred for at least 24 hrs at room temperature. One portion of the solution was used to produce solution cast film.

The remaining portion of the solution (1450 mL) was poured into acetone (5000 mL) to precipitate the starch-clay particles. The precipitate was washed 3 times with both distilled water (100 mL) and acetone (100 mL) and the solvent was evaporated to dryness at 65°C.

The product was then grounded to powder (120 g) and kept at sealed bottle.

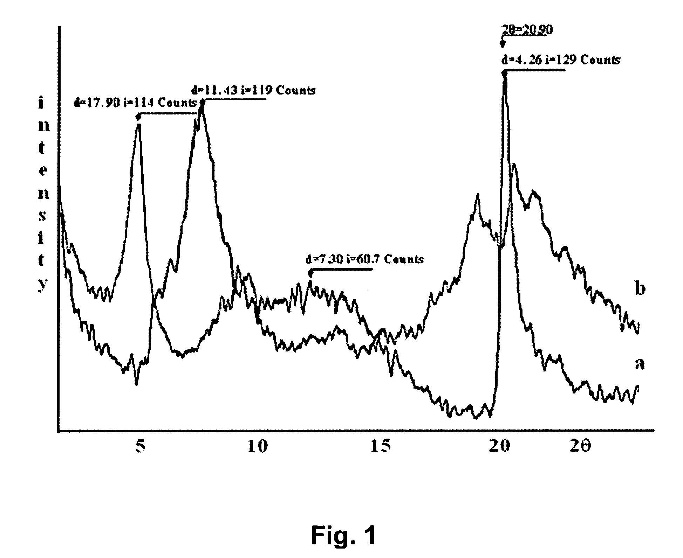

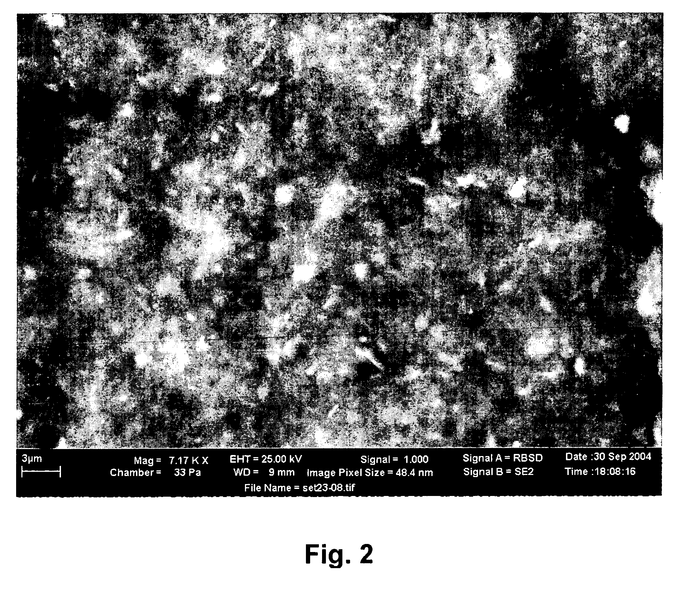

A homogeneous dispersion of clay particles in starch matrix is seen both in X-ray diffraction graph and SEM pictures as seen in Figure 1 and Figure 2, showing the X-ray diffraction result and SEM image of the resulting nanocomposite material, respectively. The interplanar basal spacing in pure clay is 11.43 A, while the clay galleries were intercalated by starch molecules with the interlayer basal spacing of 17.90 A. As clearly seen in SEM images, the clay particles are in nanometer range in thickness and are homogeneously dispersion in starch matrix.

### Example 2: Cast Film with Starch-Clay particles

150 ml of the solution obtained in Example 1 was poured into a 15 cm x 15 cm cast to produce solution cast film. The cast film is transparent in appearance but is not stable mechanically that it can change from very flexible to very brittle material, depending on the moisture content and the temperature of the environment. The mechanical properties of the film were tested at room temperature in a Zwick/ Roell Universal Testing Machine using a test speed of 5 mm/min. and the film exhibited tensile strength of about 6.3 MPa, elongation at break of 11 % and modulus of 570MPa.

### Example 3: Obtaining Chitosan-Clay Particles in water

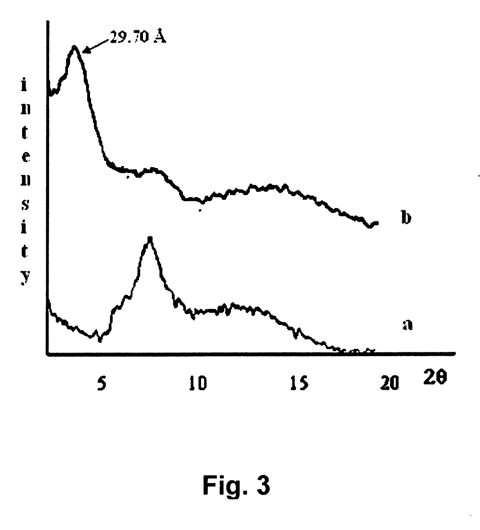

A suspension of a montmorillonite (3 g) with a CEC of 120meq/100g, was dispersed in 100ml of distilled water under stirring for 24 hrs. 30 g of chitosan was dissolved in 1000 ml warm water (80°C) containing 2 vol.% acetic acid. The pH of the chitosan solution was adjusted to 4.9 and the clay suspension was added slowly. After stirring the mixture for 24 hrs, it was precipitated in acetone, washed with water and acetone and dried. The X-ray diffraction result is shown in Figure 3, indicating the intercalated morphology. The greater level of delamination of clay layers (d=29 A) with chitosan compared to that with starch is due to the presence of cation exchangeable groups in the former one.

### Example 4: Starch-Clay Particles with plasticizer

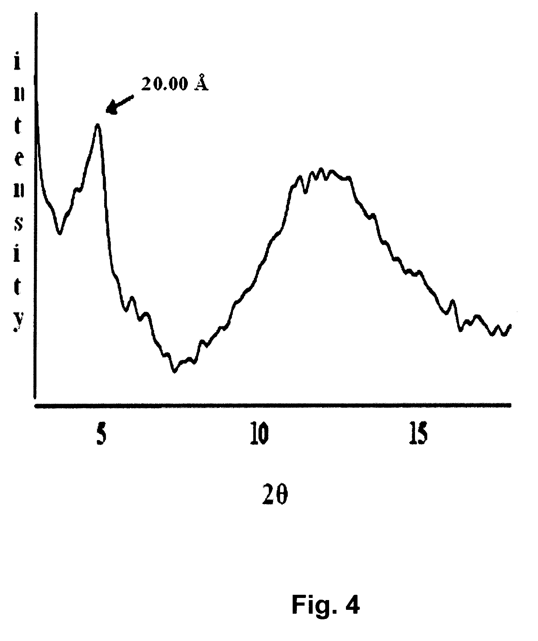

A 37 g of smectite clay mineral with a CEC of 120 meq/100g was dispersed in 275g of glycerol and allowed to swell for at least 12 hrs. The clay suspension was then added to 460g of starch and mixed mechanically. The mixture was than extruded in a twin screw extruder with UD of 44 at a temperature of between 110 to 140°C with a screw speed of 150 rpm. The resulting thermoplastic starch film has intercalated clay particles (d=20 A) as illustrated by X-ray diffraction given in Figure 4.

### Example 5 Starch-clay hybrids on PE matrix

Two comparative experiments were performed.
**5a)** 400g of starch-clay nanocomposite (20% based on the total weight) obtained in Example I and PE (1600 g) were fed into a twin-screw extruder operating at a proper rotating speed (120 rpm) and with a barrel temperature of between 130-180°C. The big granules of starch molecules on the orders of 500-600µm and the poor interfacial adhesion between corn starch and PE matrix indicates that the starch acts as physical filler in PE-Starch blends as seen in Figure 5a.
**5b**) 400g of starch-clay nanocomposite (20% based on the total weight) obtained in Example I and PE-PEgMA (64-16 w/w) mixture (1600 g were fed into a twin-screw extruder operating at a proper rotating speed (120 rpm) and with a barrel temperature of between 130-180°C. The effect of maleic anhydride grafting on the mechanical properties and morphology of the samples is seen in Table 1 and Figure 5, respectively. By the addition of PEgMA (25%w/w ), starch granule size were significantly reduced to the maximum size of 20µm and the interface distinction between PE matrix and starch granules disappeared, suggesting the improved adhesion between filler and the matrix as seen in Figure 5b.

The homogeneous dispersion of the Starch-clay hybrids on the PE matrix depends on the interaction between the polymer, silicate layers and the starch molecules intercalated between the silicate layers. The strong chemical interaction between the hydroxyl end groups of starch and carboxylic acid groups of maleic anhydride as well as the pre-dispersion of silicate layers in starch in nano-scale ranges provided more homogeneous dispersion of starch/clay hybrid as compared to dispersion of raw starch in PE-PEgMA-Starch blend. The starch granule size decreased significantly in the final product as seen in SEM image in Figure 5c.

The chemical bond interaction between the hydroxyl groups in starch and carboxylic groups in maleic anhydride is shown in the FTIR spectrum in Figure 6, with the peak appearing at around 1740cm⁻¹ which is due to C=O group of ester linkage.

### Example 6

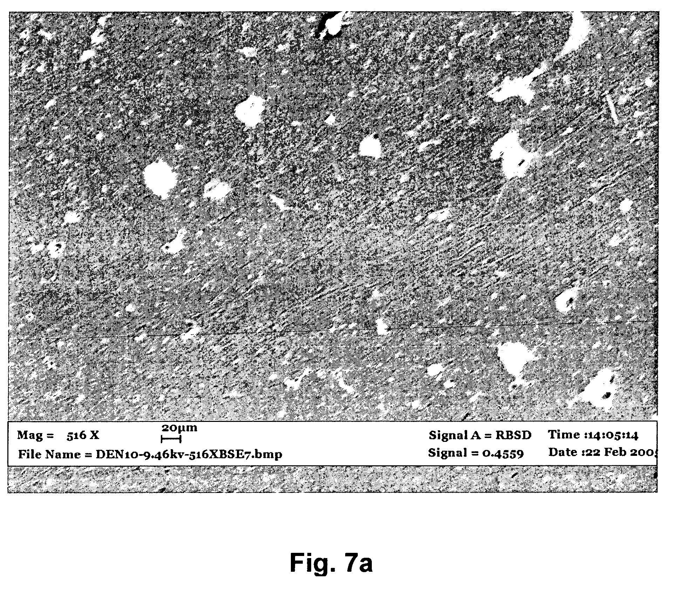

Two comparative experiments similar to Example 5 were performed.
**6a)** 400g of starch is premixed with the 240 g of plasticizer (120 g of glycerol and 120 g of formamide) and extruded together with 1600g of PE - PEgMA mixture (64-16 w/w). The amount of plasticizer was kept at 60 wt% based on starch.
**6b)** 400g of the starch-clay nanocomposite prepared in Example 1 was pre-blended with 240g of the same plasticizer system used in 6a before extruded with 1600g of PE and PEgMA mixture. The cross sections of the extrudates were observed via SEM, as shown in Figure 7a and 7b. The addition of plasticizer further reduced the size of the starch phase.

### Example 7

The granules obtained in the Examples were first melted in two-roll mills and than compression molded (100 bar) into the films with hot press. The films were 400 µm thick. The optical and mechanical properties of the resulting films were first analyzed via UV-spectrophotometer and the results are given in Figure 8. The films were also analyzed with Zwick/ Roell tensile tester at a cross speed of 50mm/min according to ASTM D 882-91 and the results are given in Table I, separately.

### Discussion of the results

The addition of starch significantly decreased the tensile strength and elongation properties of polyethylene. However when PEgMA was used as a compatibilizer it provided a better tensile strength property yet elongation values of the films were still insufficient for many applications like packaging.

In order to improve the flexibility of the films, strong intermolecular interaction between starch molecules were broken with glycerol and formamide during extrusion process so that starch has been plasticized and melt mixed with PE matrix resulting in more homogeneous mixture with less distinct interfacial and better elongation values as compared to pristine starch containing blend.

Incorporation of small amount of clay particles in the form of Starch/clay hybrid followed by plasticization of starch improved both the tensile strength and elongation properties much more significantly than all the other experiments and made the material very suitable to be used in various applications.

Although silicates are microns in diameter, when their layers are well dispersed in the polymer matrix, the resulting nanocomposite can be transparent in visible light. Figure 8 represents the UV-Vis transmission spectra of the samples.

The spectra show that the transparency of the polyethylene film is not affected much by the presence of starch/clay hybrid indicates further the homogeneous dispersion of silicate layers and starch molecules. The film having starch and compatibilizer, on the other hand, exhibits much poorer optical transparency as also seen in Figure 8d.

Biodegradation rate of starch containing films were investigated using AG-Amiloglucosidase that digests both amylose and amylopectin chains and results in the liberation of glucose molecules. The amount of glucose molecules evolved was calculated from the absorbance values of the enzyme solutions at specific wavelength. In order to determine the total amount of glucose in starch granules, raw starch film was also incubated in enzyme solution.

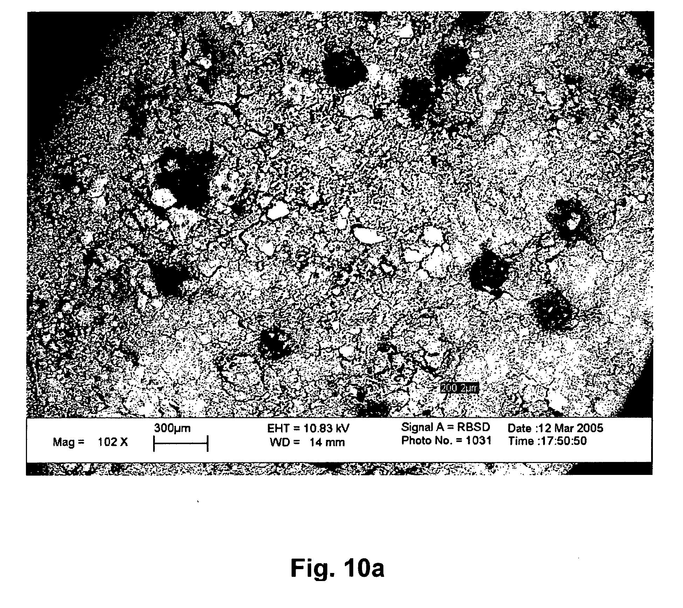

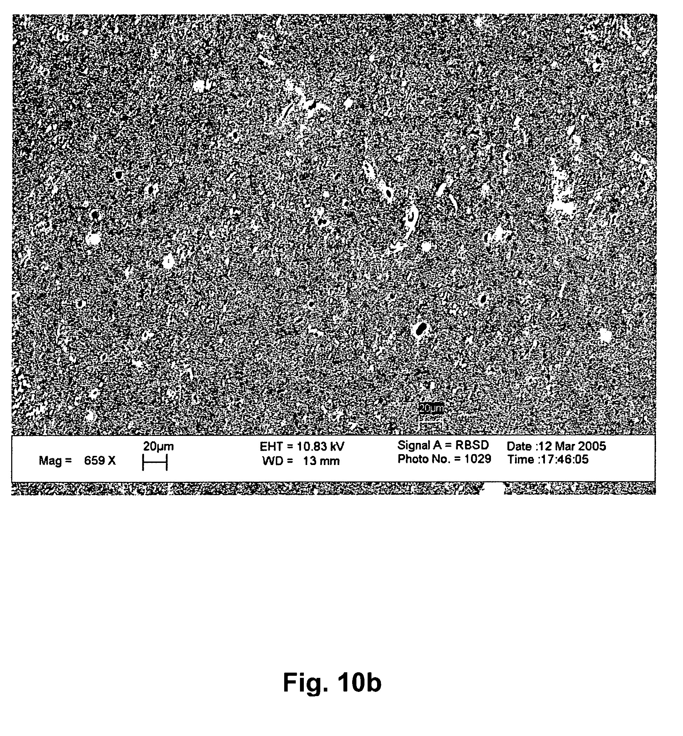

Figure 10 presents SEM images that were taken from the degraded films after 55 hours of incubation. The formation of pores in starch granules were observed in the film surfaces. It was calculated that 45 wt % of starch present in nanocomposite film has been digested after 55 hours of incubation, while 55 wt % of starch has been degraded in the film containing only PE and starch. This difference is attributed to the presence of larger starch granules in the film having PE and starch.

The biodegradable thermoplastic nanocomposite polymers obtained are very suitable to be used in various applications like packaging materials, yogurt containers, plastic dishes, agricultural mulch films, marketing bags, etc.

## Claims

1. Method for preparing a natural polymer-clay nanocomposite, comprising dissolving a natural polymer in a solvent, mixing it with a clay dispersion, stirring it, obtaining a precipitate, **characterized in that** • before the addition of the clay dispersion the pH of the solution is adjusted to acidic, • the clay is added in an amount of 2 to 50wt% based on the weight of the natural polymer and **in that** • the method comprises a plasticizer to be present in an amount of 25% to 80wt% based on the weight of the natural polymer.

2. Method according to claim 1, **characterized in that** the plasticizer is present in the solvent of the natural polymer or in the clay dispersion.

3. Method according to claim 1, **characterized in that** the precipitate is grounded to a powder and the plasticizer is blended with the grounded powder.

4. Method according to any one of the preceding claims, **characterized in that** the pH of the solution is adjusted between 4 and 5.

5. Method according to any one of the preceding claims, **characterized in that** the clay is selected among naturally occurring smectite clays having a layered structure and a cation exchange capacity of from 30-250 meq/100 gram, like montmorillonite.

6. Method according to any one of the preceding claims, **characterized in that** the natural polymer is selected from the group comprising starch, chitosan, carbohydrates, keratin, cellulose, proteins and derivatives thereof like carboxy methylated cellulose (CMC) or ester grafter chitosan, polylactic acid, etc.

7. Method according to claim 6, **characterized in that** the natural polymer is starch like corn starch, wheat starch, rice starch, potato starch etc.

8. Method according to any one of the preceding claims, **characterized in that** the plasticizer is selected from the group comprising glycerol, formamide, ethylene glycol, propylene glycol, polyethylene glycol, sorbitol and/or may be a polymer selected from an aliphatic polyester, a copolyester with aliphatic and aromatic blocks, a polyester amide, a polyester urethane, a polyethylene oxide, a polyether polyol, polyglycol and/or mixtures thereof.

9. Natural polymer-clay nanocomposite obtained in the method according to any one of the preceding claims, **characterized in that** the clay layers are intercalated with the natural polymer. (or clay is ion-exchanged with the natural polymer).

10. Natural polymer-clay nanocomposite according to claim 9, **characterized in that** it is in powder form.

11. Process for preparing a biodegradable thermoplastic nanocomposite granules, comprising the following steps:
➢ melt blending a natural polymer-clay nanocomposite in an extruder at a suitable
temperature of between 110-250°C with a synthetic polymer;
➢ granulating the material obtained in a pelleticizer;
**characterized in that** the natural polymer-clay nanocomposite is obtained with the method according to any one of claims 1 to 8.

12. Process for preparing a biodegradable thermoplastic nanocomposite according to claim 11, **characterized in that** in the melt blending step also comprises blending a compatibilizing agent in an amount of 5 to 30 wt%, based on the total weight.

13. Process for preparing a biodegradable thermoplastic nanocomposite according to anyone of claims 11 and 12, **characterized in that** the compatibilizing agent is selected from the group comprising: maleic anhydride, glycidyl epoxidized, acrylic acid and/or TMI grafted polyolefin or it can be any graft or block copolymer having one structural units (A) that is compatible with the natural polymer and second structural unit (B) that is compatible with the thermoplastic matrix.

14. Process for preparing a biodegradable thermoplastic nanocomposite according to anyone of claims 11 to 13, **characterized in that** the synthetic polymer is selected from the group comprising: polyethylene oxide, low density polyethylene, high density polyethylene, polypropylene and the combination thereof may be chosen, suitable thermoplastic resins are any thermoplastic material having a melting temperature lower than the degradation temperature of the natural polymer

15. Biodegradable thermoplastic nanocomposite granules obtained with the process according to any one of claims 11 to 14, **characterized in that** the natural polymer is present in an amount of 10 to 50 wt% of the total weight.

16. Biodegradable thermoplastic nanocomposite granules according to claim 15, **characterized in that** the weight ratio of the amount of clay to the amount of polymeric matrix is 1 to 10%, preferably 1 to 5 wt %.

17. Use of the biodegradable thermoplastic nanocomposite granules according to any one of claims 15 and 16 for producing biodegradable thermoplastic nanocomposite polymers.

18. Use according to claim 17, **characterized in that** said use contains a method chosen from the group comprising: casting, compression molding, injection molding, blow molding.

19. Biodegradable thermoplastic nanocomposite polymers according to any one of claims 17 or 18, **characterized in that** they are transparent and have improved tensile strength and good elongation properties:

20. Biodegradable thermoplastic nanocomposite polymers according to claim 19, **characterized in that** they are in the form of packaging materials.

## Amended claims

### Amended claims in accordance with Rule 86(2) EPC.

**1.** Process for preparing biodegradable thermoplastic nanocomposite granules, comprising the following steps:
a)dissolving a natural polymer selected from the group comprising starch, chitosan, carbohydrates, keratin, cellulose, proteins and derivatives thereof like carboxy methylated cellulose (CMC) or ester grafted chitosan, polylactic acid, etc in a solvent;
b)adjusting the pH of the solution to acidic;
c) adding %2 to %50wt natural clay based on the weight of the natural polymer;
d)stirring the solution to obtain a natural polymer-clay nanocomposite precipitate;
e)melt blending the natural polymer-clay nanocomposite in an extruder at a suitable temperature of between 110-250°C with a synthetic polymer selected from the group comprising: polyethylene oxide, low density polyethylene, high density polyethylene, polypropylene and the combination thereof as well as any polyolefin having a melting temperature lower than the degradation temperature of the natural polymer;
f) granulating the material obtained in a pelleticizer.

**2.** Process according to claim 1, **characterized in that** it comprises an additional step of adding 25% to 80wt% plasticizer based on the weight of the natural polymer.

**3.** Process according to claim 2, **characterized in that** the plasticizer is added in step c) to the solvent of the natural polymer or of the clay dispersion.

**4.** Process according to claim 2, **characterized in that** the plasticizer is added by grounding the precipitate of step d) to a powder and blending the plasticizer with the grounded powder.

**5.** Process according to any one of the preceding claims, **characterized in that** the plasticizer is selected from the group comprising glycerol, formamide, ethylene glycol, propylene glycol, polyethylene glycol, sorbitol and/or a polymer selected from an aliphatic polyester, a copolyester with aliphatic and aromatic blocks, a polyester amide, a polyester urethane, a polyethylene oxide, a polyether polyol, polyglycol and/or mixtures thereof.

**6.** Process according to any one of the preceding claims, **characterized in that** the natural clay is selected among naturally occurring smectite clays having a layered structure and a cation exchange capacity of from 30-250 meq/ 100 gram.

**7.** Process according to any one of the preceding claims, **characterized in that** in the melt blending step also comprises blending a compatibilizing agent in an amount of 5 to 30 wt% based on the total weight.

**8.** Process according to any one of the preceding claims, **characterized in that** the compatibilizing agent is selected from the group comprising: maleic anhydride, glycidyl epoxidized, acrylic acid and/or TMI grafted polyolefin or it can be any graft or block copolymer having one structural units (A) that is compatible with the natural polymer and second structural unit (B) that is compatible with the thermoplastic matrix.

**9.** Biodegradable thermoplastic nanocomposite granules obtained with the process according to any one of the preceding claims, **characterized in that** the natural polymer is present in an amount of 10 to 50 wt% of the total weight.

**10.** Biodegradable thermoplastic nanocomposite granules according to claim 9, **characterized in that** the weight ratio of the amount of clay to the amount of polymeric matrix is 1 to 10%, preferably 1 to 5 wt %.

**11.** Use of the biodegradable thermoplastic nanocomposite granules according to any one of claims 9 and 10 for producing biodegradable thermoplastic nanocomposite polymers.

**12.** Use according to claim 11, **characterized in that** said use contains a method chosen from the group comprising: casting, compression molding, injection molding, blow molding.

**13.** Biodegradable thermoplastic nanocomposite polymers obtained by any one of claims 11 or 12, **characterized in that** they are transparent and have improved tensile strength and good elongation properties.

**14.** Biodegradable thermoplastic nanocomposite polymers according to claim 13 **characterized in that** they are in the form of packaging materials.
